(19) Europäisches Patentamt / European Patent Office / Office européen des brevets

(11) **EP 2 495 865 B1**

(12) **FASCICULE DE BREVET EUROPEEN**

(45) Date de publication et mention
de la délivrance du brevet:
**23.01.2019 Bulletin 2019/04**

(51) Int Cl.:
*H02M 1/32* *(2007.01)*        *H02M 3/156* *(2006.01)*
*H02M 1/00* *(2006.01)*        *H02M 7/5387* *(2007.01)*

(21) Numéro de dépôt: **12152043.1**

(22) Date de dépôt: **23.01.2012**

(54) **Procédé de limitation d'un courant fourni par une source d'alimentation en courant continu**

Begrenzungsverfahren für einen Strom, der von einer Gleichstromquelle geliefert wird

Method for limiting the current provided by a direct-current power source

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.02.2011 FR 1150790**

(43) Date de publication de la demande:
**05.09.2012 Bulletin 2012/36**

(73) Titulaire: **Safran Landing Systems
78140 Vélizy-Villacoublay (FR)**

(72) Inventeurs:
• **Leynaert, François-Noël
95160 Monmorency (FR)**
• **Annee, Etienne
92400 Courbevoie (FR)**

(74) Mandataire: **Parzy, Benjamin Alain et al
Cabinet Boettcher
16, rue Médéric
75017 Paris (FR)**

(56) Documents cités:
EP-A1- 0 606 089        US-A- 5 113 085
US-A1- 2009 231 889

# Description

L'invention est relative à un procédé de limitation d'un courant fourni par une source d'alimentation en courant continu.

## ARRIERE-PLAN TECHNOLOGIQUE

Pour diverses raisons, notamment des raisons d'économie d'énergie ou de protection des équipements alimentés, on cherche à limiter le courant issu d'une source de courant continu.

En particulier, on connaît le cas des aéronefs pourvus de bus de puissance pour amener une puissance alternative générée par les alternateurs de l'aéronef vers les actionneurs électromécaniques susceptibles de consommer cette puissance. Un convertisseur transforme la puissance alternative en une puissance continue, et il convient de faire en sorte de limiter la puissance consommée par les actionneurs afin d'économiser celle-ci.

Divers types de limitation de puissance sont connues. Elles font généralement appel à un asservissement basé sur une modélisation de la charge à alimenter. L'asservissement vise à limiter la consigne de couple moteur fonction de la vitesse de rotation du moteur, ou encore à limiter la consigne de vitesse fonction du couple du moteur, de sorte à limiter la puissance consommée.

Ces procédés présentent l'inconvénient de dépendre de la charge à alimenter.

Le document US 2009/0231889 A1 décrit un procédé de limitation d'un courant fourni par une source d'alimentation en courant continu.

## OBJET DE L'INVENTION

L'invention a pour objet un procédé de limitation de courant ne dépendant pas de la charge à alimenter.

## BREVE PRESENTATION DE L'INVENTION

L'invention est relative à un procédé de limitation selon la revendication 1.

Si la quantité moyennée est inférieure au seuil de courant, l'interrupteur n'est jamais ouvert, et tout se passe comme s'il n'y avait pas de limitation. Ce n'est que si la quantité moyennée atteint le seuil que l'on ouvre l'interrupteur (à un instant $t_{ouv}<T$). Le courant délivré à la charge diminue alors pendant le temps d'ouverture de l'interrupteur en tournant dans le circuit constitué de la diode de roue libre et de la composante inductive de la charge. Le courant moyen pendant la période est ainsi limité.

De préférence, on fait suivre l'étage de commutation d'un étage de filtrage différentiel permettant d'obtenir en sortie un courant continu avec très peu de distorsion harmonique.

De préférence, le signal de commande de l'interrupteur est une sortie d'un comparateur comparant la sortie d'un intégrateur réinitialisable effectuant le calcul de ladite quantité moyennée à une consigne de courant égale au courant de seuil $i_{seuil}$, l'intégrateur recevant en entrée le courant image du courant de source.

La commande de l'interrupteur peut être ainsi faite de façon analogique, et de façon purement passive. La limitation du courant ne dépend pas d'un modèle électrique de la charge et d'un modèle de ses pertes électriques, de sorte que le procédé de l'invention est particulièrement robuste.

Le procédé de limitation de courant de l'invention peut faire l'objet de diverses applications. Selon une première application, le procédé de limitation est appliqué à un convertisseur de puissance, tel qu'un onduleur, par exemple un onduleur utilisé pour alimenter un moteur sans balais à courant continu. En effet, un tel onduleur comporte une pluralité de bras (au moins autant que le moteur possède de phases à alimenter) équipés chacun de deux cellules de commutation en série comportant chacune un interrupteur commandable disposé en parallèle avec une diode. Les cellules de commutation servent à l'aiguillage des courants vers les phases du moteur en fonction de la position angulaire de son rotor. Selon l'invention, les cellules de commutation sont commandées pour hacher le courant selon le procédé de limitation de l'invention de sorte à limiter le courant fourni aux phases du moteur, la cellule de commutation commandée selon le procédé de limitation étant choisie en fonction de la position angulaire du rotor.

## PRESENTATION DES FIGURES

L'invention sera mieux comprise à la lumière de la description qui suit d'un mode particulier de mise en oeuvre du procédé de l'invention, en référence aux figures des dessins annexés parmi lesquels :

- la figure 1 est un schéma électrique d'un étage de commutation nécessaire à la mise en oeuvre du procédé de l'invention ;
- la figure 2 est un graphe des courants en amont et en aval de l'étage de commutation ;
- la figure 3 est un schéma électrique de la commande de l'interrupteur de l'étage de commutation ;
- les figures 4a et 4b sont des schémas d'un onduleur associé à un moteur sans balais à courant continu, illustrant comment le procédé de l'invention peut être mis en oeuvre dans un convertisseur de puissance selon une première variante de mise en oeuvre;
- les figures 5a et 5b sont des schémas d'un onduleur associé à un moteur sans balais à courant continu, illustrant comment le procédé de l'invention peut être mis en oeuvre dans un convertisseur de puissance, selon une deuxième variante de mise en oeuvre ;
- la figure 6 est un schéma électronique montrant l'intégration de la limitation de courant selon l'invention à un circuit de modulation de largeur d'impulsion ;

- la figure 7 est un schéma illustrant l'interposition entre un réseau d'alimentation et une charge d'un dispositif de limitation de puissance intégrant la limitation de courant selon l'invention.

DESCRIPTION DETAILLEE DE L'INVENTION

L'invention est appliquée à la limitation du courant délivré par une source de courant continu, par exemple un alternateur d'aéronef délivrant une énergie électrique alternative qui est transportée par un réseau de puissance et redressée par un redresseur avant son utilisation par les consommateurs reliés au réseau.

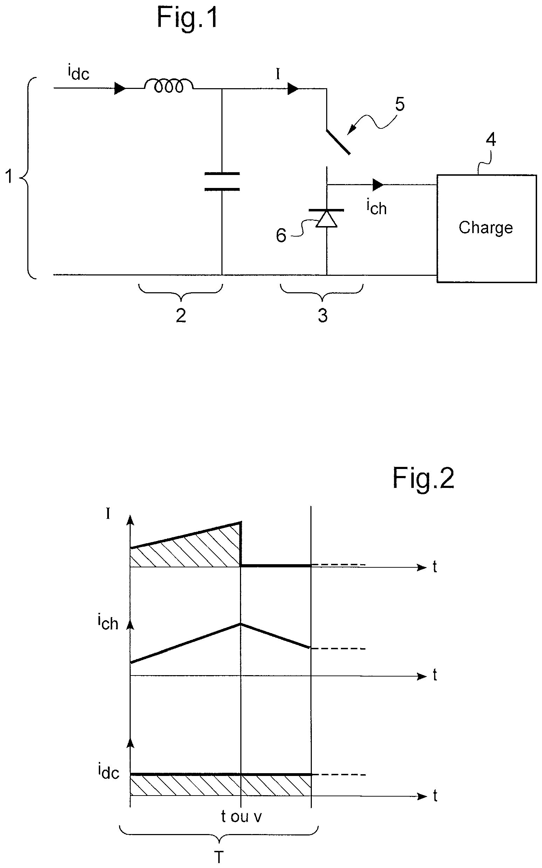

Comme illustré à la figure 1, le réseau 1 délivre un courant continu $i_{dc}$ qui est d'abord traité par un filtre différentiel d'entrée 2 pour donner un courant filtré I. Un étage de commutation 3 est disposé en aval du filtre 2 pour délivrer un courant de charge $i_{ch}$ qui est limité selon les dispositions détaillées plus loin pour alimenter une charge 4 comportant une composante inductive, par exemple un bobinage de moteur électrique. L'étage de commutation 3 comporte un interrupteur commandé 5 en série avec une diode de roue libre 6 aux bornes de laquelle la charge 4 est reliée.

La limitation du courant se fait de la façon suivante. A chaque période de temps de durée T, on calcule la quantité moyennée

$$\bar{i}(t) = \frac{1}{T} \int_0^t I \cdot dt .$$

Tant que cette quantité est inférieure à un courant de seuil $i_{seuil}$ prédéterminé, on maintient l'interrupteur 5 fermé. Ainsi, le courant $i_{ch}$ que voit la charge est alors égal au courant I sortant du filtre 2. Si pendant la période T, la quantité

$$\bar{i}(t) = \frac{1}{T} \int_0^t I \cdot dt$$

atteint le courant de seuil $i_{seuil}$, alors on ouvre l'interrupteur 5, isolant ainsi la charge 4 du reste du réseau. Le courant $i_{ch}$ résulte alors d'une circulation de courant dans le circuit fermé composé de la charge 4 avec sa composante inductive et la diode de roue libre 6, ce courant diminuant progressivement jusqu'à ce que, la fin de la période T étant atteinte, on referme à nouveau l'interrupteur 5 et on réinitialise le calcul de la quantité

$$\bar{i}(t) = \frac{1}{T} \int_0^t I \cdot dt .$$

Le résultat de cette ouverture périodique est visible sur le graphe de la figure 2, dans lequel on distingue en haut le courant I sortant de l'étage de filtrage, au milieu le courant $i_{ch}$ vu par la charge, et en bas le courant $i_{dc}$ (idéalisé) effectivement consommé par la charge.

Sur la figure, on distingue l'instant $t_{ouv}$ pour lequel l'interrupteur 5 est ouvert. Le courant I est alors nul au-delà de cet instant. Quant au courant $i_{ch}$ vu par la charge il suit fidèlement le courant I puis diminue au-delà de l'instant $t_{ouv}$. Enfin, le courant $i_{dc}$ est tel que l'aire hachurée sous la courbe de courant I et l'aire hachurée sous la courbe de courant $i_{dc}$ soient sensiblement égales.

Cette méthode de limitation permet ainsi de maîtriser la valeur maximale atteinte par le courant $i_{dc}$. Bien sûr, la maîtrise fine du courant $i_{dc}$ dépend des caractéristiques de l'étage de filtrage ainsi que des impédances du réseau. Si l'étage de filtrage ne présente pas de résonance (donc pas d'amplification), la valeur maximale en moyenne du courant $i_{dc}$ sur une période T pourra être garantie. Si de plus l'étage de filtrage a une fréquence de coupure nettement inférieure à la fréquence de hachage 1/T, la valeur maximale de pic du courant $i_{dc}$ sera également garantie.

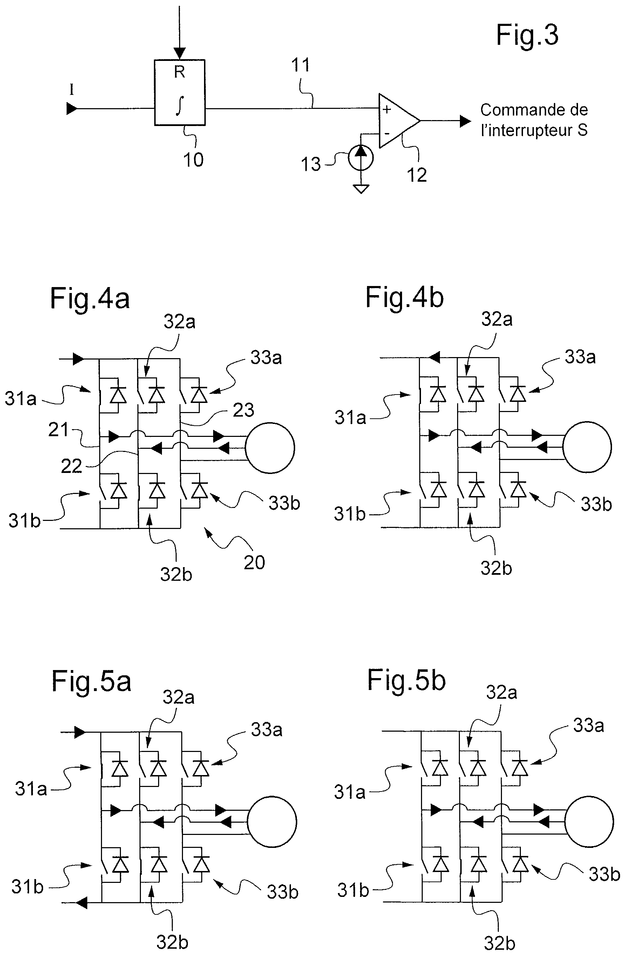

Un exemple de circuit de commande de l'interrupteur 5 est donné à la figure 3. Le courant I est fourni en entrée d'un intégrateur 10 réinitialisable (par l'entrée R), qui intègre le courant fourni. La sortie 11 de l'intégrateur 10 est, à un facteur T près, égale à la quantité

$$\bar{i}(t) = \frac{1}{T} \int_0^t I \cdot dt .$$

La sortie de l'intégrateur est fournie en première entrée d'un comparateur 12 qui compare la valeur ainsi fournie à une consigne 13 prédéterminée, image du courant de seuil $i_{seuil}$, fournie à la deuxième entrée du comparateur 12. La sortie du comparateur 12 prend alors deux valeurs, selon que la première entrée est inférieure ou supérieure à la deuxième entrée, ce qui permet de commander l'interrupteur 5. A la fin de la période T, la sortie 11 de l'intégrateur 10 est réinitialisée à zéro.

Ce procédé de limitation de puissance peut être mis en oeuvre dans des convertisseurs de puissance, par exemple un onduleur alimentant un moteur sans balais à courant continu. Comme illustré à la figure 4a, un tel onduleur 20 comporte des bras 21, 22, 23 (ici trois bras puisque le moteur comporte trois phases) comportant chacun deux cellules de commutation en série (respectivement 31a, 31b ; 32a, 32b ; 33a, 33b) comprenant chacune un interrupteur commandé (par exemple un transistor IGBT) monté parallèle avec une diode.

On sait que les cellules de commutation permettent d'aiguiller le courant alimentant le moteur vers la phase adéquate en fonction de la position angulaire du rotor du moteur. Mais les cellules de commutation peuvent également servir à limiter le courant consommé par le moteur selon le procédé de l'invention.

La mise en oeuvre du procédé de limitation de l'invention à un onduleur est maintenant expliquée en relation avec les figures 4a et 4b. On supposera ici que la position du rotor est telle qu'il convient d'alimenter les phases associées au premier bras 31 et au deuxième bras 32. Au début d'une période T, on ferme l'interrupteur de la cellule 31a et celui de la cellule 32b, permettant ainsi la circulation d'un courant $i_{ch}$ dans la phase du moteur associée au premier bras 31 et d'un courant opposé dans la phase du moteur associée au deuxième bras 32. Les autres interrupteurs des autres cellules sont maintenus ouverts. C'est la situation illustrée à la figure 4a.

On initialise le calcul de la quantité

$$\bar{i}(t) = \frac{1}{T} \int_0^t I \cdot dt,$$

et quand celle-ci atteint un seuil prédéterminé, on ouvre l'interrupteur de la cellule 32b, comme illustré à la figure 4b. Ainsi, tous les interrupteurs des cellules du bas (31b, 32b, 33b) sont ouverts. On a alors refermé les phases du moteur concernées dans un circuit comprenant la diode de la cellule 32a qui tient alors le rôle de diode de roue libre de l'étage de commutation de la figure 1. A la fin de la période T, on referme l'interrupteur de la cellule 32b et on réinitialise le calcule de la quantité moyennée, revenant ainsi à la situation de la figure 4a.

Alternativement, comme illustré aux figures 5a et 5b, on peut maintenir fermé l'interrupteur de la cellule 32b, puis et fermer et ouvrir l'interrupteur de la cellule 31a. C'est alors la diode de la cellule 31b qui jouera le rôle de diode de roue libre lorsque l'interrupteur de la cellule 31a sera ouvert.

Bien entendu, les cellules de commutation concernées pour la mise en oeuvre du procédé de limitation de l'invention dépendent des phases à alimenter, et donc de la position angulaire du rotor. Ainsi, on appariera respectivement les cellules 32a et 33b pour l'alimentation des deuxième et troisième phases, et les cellules 33a et 31b pour l'alimentation des troisième et première phases.

Le procédé de l'invention est encore applicable aux techniques de hachage dans lesquelles l'interrupteur du même bras se ferme lorsque l'interrupteur d'une cellule est ouvert selon le procédé de l'invention.

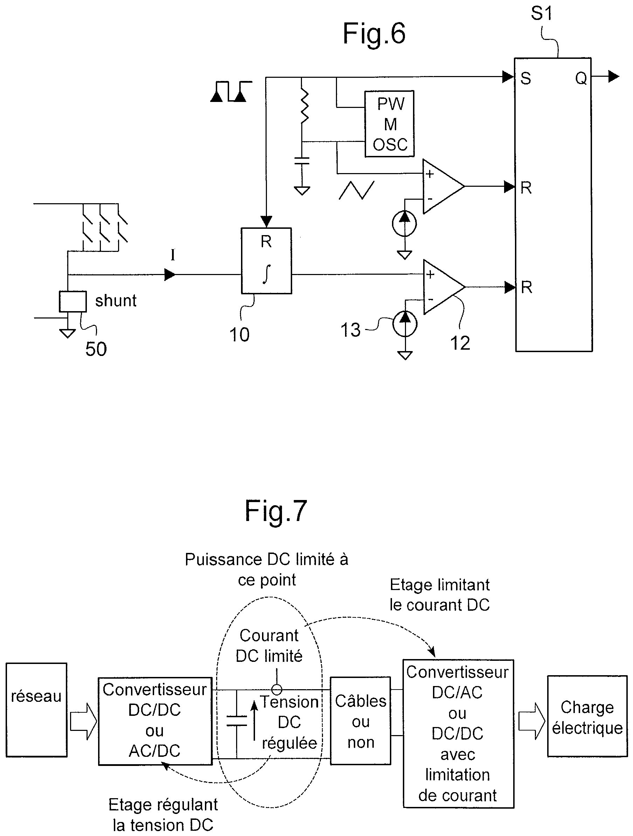

En pratique, une telle limitation de courant peut être intégrée dans un circuit classique de modulation d'impulsion MLI (ou PWM en anglais), comme illustré à la figure 6. On remarquera que le courant I fourni à l'intégrateur est mesuré au moyen d'un shunt 50 en pied de l'onduleur. L'interrupteur associé est commandé par la sortie Q d'une bascule 51 à logique set/reset qui comporte alors deux entrées de réinitialisation, une première fournie par l'étage de modulation d'impulsion, et une deuxième fournie par l'étage de limitation de courant.

La limitation de courant selon l'invention pourra également être associée à une limitation de tension pour contrôler la puissance consommée, comme illustré à la figure 7.

L'invention n'est pas limitée à ce qui vient d'être décrit, mais englobe au contraire toute variante entrant dans le cadre défini par les revendications. En particulier, bien que l'on ait indiqué que l'on intègre le courant I provenant du filtrage du courant issu de la source de courant électrique, on pourra plus généralement intégrer une image du courant fourni par la source, par exemple le courant de source lui-même ou un courant obtenu à partir du courant de source, comme le courant filtré I.

**Revendications**

**1.** Procédé de limitation d'un courant ($i_{dc}$) fourni par une source d'alimentation en courant continu, comportant :

- l'interposition entre la source et une charge d'un étage de commutation comportant un interrupteur commandable en série avec une diode de roue libre,
- la commande périodique de l'interrupteur de sorte que pour chaque période de durée T, on

$$\frac{1}{T} \int_0^t i \cdot dt,$$

calcule la quantité moyennée où $i$ est un courant image du courant de source (($i_{dc}$), la quantité moyennée étant réinitialisée à zéro à chaque début de période, et on commande la fermeture de l'interrupteur tant que la dite quantité moyennée reste inférieure à un seuil de courant ($i_{seuil}$) prédéterminé, et on commande l'ouverture de l'interrupteur dans le cas contraire,

**caractérisé en ce que** le procédé est appliqué à un convertisseur de puissance comportant une pluralité de bras (21, 22, 23) comportant chacun deux cellules de commutation en série (31a, 31b ; 32a, 32b ; 33a, 33b) qui comprennent chacune un interrupteur commandé monté en parallèle avec une diode, et **en ce qu'**on maintient pendant la durée de la période T un interrupteur d'une des cellules d'un des bras fermé, tandis que l'on commande un interrupteur d'une des cellules d'un autre des bras selon l'étape de commande périodique.

**2.** Procédé selon la revendication 1, dans lequel le courant image ($i$) est un courant (I) obtenu par filtrage différentiel du courant de source.

**3.** Procédé selon la revendication 1, dans lequel le signal de commande de l'interrupteur est une sortie d'un comparateur (12) comparant la sortie (11) d'un intégrateur (10) réinitialisable à une consigne de courant (13) égale au courant de seuil ($i_{seuil}$), l'intégrateur recevant en entrée le courant image du courant de source.

**Patentansprüche**

**1.** Verfahren zum Begrenzen eines Stroms ($i_{dc}$), der von einer Gleichstrom-Versorgungsquelle geliefert wird, wobei das Verfahren umfasst:

- die Anordnung einer Schaltstufe zwischen der Quelle und einer Last, wobei die Schaltstufe einen steuerbaren Schalter umfasst, der in Reihe mit einer Freilaufdiode geschaltet ist,
- die periodische Steuerung des Schalters, so dass für jede Periode mit einer Dauer T die durchschnittliche Menge $\frac{1}{T}\int_0^t i \cdot dt$ berechnet wird, wobei i ein Bildstrom des Quellstroms ($i_{dc}$) ist, wobei die durchschnittliche Menge zu Beginn jeder Periode auf null zurückgesetzt wird, und das Schließen des Schalters gesteuert wird, solange die genannte durchschnittliche Menge unter einem vorbestimmten Stromschwellwert ($i_{seuil}$) bleibt, und andernfalls das Öffnen des Schalters gesteuert wird,

**dadurch gekennzeichnet, dass** das Verfahren an einem Leistungswandler angewandt wird, der eine Vielzahl von Armen (21, 22, 23) umfasst, die jeweils zwei Schaltzellen (31a, 31b; 32a, 32b; 33a, 33b) in Reihe umfassen, die jeweils einen gesteuerten Schalter umfassen, der parallel zu einer Diode geschaltet ist,
und dass während der Dauer der Periode T ein Schalter einer der Zellen eines der Arme geschlossen gehalten wird, während ein Schalter einer der Zellen eines anderen der Arme gemäß dem Schritt der periodischen Steuerung gesteuert wird.

2. Verfahren nach Anspruch 1, bei dem der Bildstrom (*i*) ein Strom (I) ist, der durch Differentialfilterung des Quellstroms erhalten wird.

3. Verfahren nach Anspruch 1, bei dem das Steuersignal zum Steuern des Schalters ein Ausgang eines Komparators (12) ist, der den Ausgang (11) eines zurücksetzbaren Integrators (10) mit einem Stromsollwert (13) vergleicht, der gleich dem Schwellwertstrom ($i_{seuil}$) ist, wobei der Integrator am Eingang den Bildstrom des Quellstroms empfängt.

**Claims**

1. A method of limiting a current $i_{dc}$ supplied by a DC power supply, the method comprising:

• interposing a switching stage between the power supply and a load, the switching stage including a controllable switch in series with a freewheel diode; and
• periodically controlling the switch so that for each period of duration T, the following averaged quantity

$$\frac{1}{T}\int_o^t \underline{i}.dt$$

is calculated in which i is a current that is an image of the power supply current $i_{dc}$, the averaged quantity being reset to zero at the beginning of each period, with the switch being caused to be closed so long as said averaged quantity remains below a predetermined current threshold $i_{thresh}$, and with the switch being caused to be open, otherwise,
**characterized in that** the method is applied to a power converter including a plurality of arms, each of which arm comprises two switching cells in series, each cell comprising a controlled switch connected in parallel with a diode, and **in that**, for the duration of the period T, a switch in one of the cells of one of the arms is kept closed while a switch of another one of the cells in another one of the arms is controlled in application of the periodic control step.

2. A method according to claim 1, wherein the image current $\underline{i}$ is a current I obtained by differential filtering of the power supply current.

3. A method according to claim 1, wherein the switch control signal is an output from a comparator that compares the output from a resettable integrator with a current setpoint equal to the threshold current $i_{thresh}$, the integrator receiving as input the current that is an image of the power supply current.

## Fig.1

## Fig.2

Fig.3

Fig.4a

Fig.4b

Fig.5a

Fig.5b

# Fig.6

S1

PW
M
OSC

S    Q

R

R

R

∫

I

shunt

50

10

13

12

# Fig.7

Puissance DC limité à
ce point

Etage limitant
le courant DC

Courant
DC limité

réseau

Convertisseur
DC/DC
ou
AC/DC

Tension
DC
régulée

Câbles
ou
non

Convertisseur
DC/AC
ou
DC/DC
avec
limitation
de courant

Charge
électrique

Etage régulant
la tension DC

**EP 2 495 865 B1**

## RÉFÉRENCES CITÉES DANS LA DESCRIPTION

**Documents brevets cités dans la description**

- US 20090231889 A1